# EUROPÄISCHE PATENTSCHRIFT

(11) **EP 3 678 966 B1**
(45) Veröffentlichungstag und Bekanntmachung des Hinweises auf die Patenterteilung: **29.04.2026**
(21) Anmeldenummer: 18759600.2
(22) Anmeldetag: 21.08.2018
(51) Int. Cl.: B65G 47/86, B67C 7/00

(54) **TRANSPORTVORRICHTUNG ZUM TRANSPORTIEREN VON BEHÄLTERN**
TRANSPORTING DEVICE FOR TRANSPORTING CONTAINERS
DISPOSITIF DE TRANSPORT POUR TRANSPORTER DES RÉCIPIENTS

(30) Priorität: 04.09.2017 DE 202017105320 U
(43) Veröffentlichungstag der Anmeldung: 15.07.2020
(73) Patentinhaber: Krones AG, 93073 Neutraubling (DE)
(72) Erfinder: BAUER, Veronika, 93073 Neutraubling (DE); PEUTL, August, 93073 Neutraubling (DE); WEIGL, Franz, 93073 Neutraubling (DE); DOMEIER, Bernhard, 93073 Neutraubling (DE)
(74) Vertreter: Grünecker Patent- und Rechtsanwälte PartG mbB
(86) Internationale Anmeldenummer: PCT/EP2018/072510
(87) Internationale Veröffentlichungsnummer: WO 2019/042817

(56) Entgegenhaltungen:
- EP-A1- 1 028 075
- EP-A1- 1 264 771
- EP-A1- 2 615 047
- EP-A1- 3 597 574
- WO-A1-2014/161635
- WO-A1-2017/140397

## Beschreibung

Die Erfindung betrifft eine Transportvorrichtung zum Transportieren von Behältern mit einer Mehrzahl von Pucks, die jeweils zum Aufnehmen und stehenden Transport eines Behälters ausgebildet sind, wobei die Transportvorrichtung derart ausgebildet ist, dass die Behälter mittels der Pucks zu einer Behandlungsstrecke einer Behandlungsmaschine hin und von der Behandlungsstrecke weg transportierbar sind, wobei die Transportvorrichtung derart ausgebildet ist, dass die Behälter beim Durchlaufen der Behandlungsstrecke aus den Pucks entnommen sind. Die Behälter werden in der Behandlungsmaschine entlang der Behandlungsstrecke transportiert und dort behandelt.

Bei der Bearbeitung von Behältern ist ein geeigneter Transport der Behälter zwischen und in entsprechenden Behandlungsmaschinen, beispielsweise Etikettierern, Direktdruckmaschinen oder Inspektionsmaschinen, von großer Bedeutung. Es muss sichergestellt werden, dass die Behälter nicht umfallen und in vielen Fällen auch, dass sie in vorgegebenen Abständen und geeigneter Ausrichtung in die Behandlungsmaschine transportiert werden.

Eine besondere Herausforderung stellen dabei Behälter dar, die eine komplexe Form aufweisen, insbesondere keine eigene Standfläche aufweisen oder eine Standfläche, die keine ausreichende Stabilisierung ermöglicht.

Es ist bekannt, sogenannte Pucks zu verwenden, um Behälter einzeln zu transportieren. Die Pucks sind austauschbare Transportelemente die jeweils einen Boden und seitliche Stützelemente, die auf dem Boden stehende Behälter seitlich stützen, aufweisen. Insbesondere kann es sich um tassenförmige Elemente mit einer Aufnahme handeln, in der ein unterer Teil der Behälter aufgenommen wird. Dabei kann ein Puck mit einer Aufnahmeform entsprechend dem aktuell zu bearbeitenden Behältertyp gewählt werden. So können die Behälter stehend transportiert werden und werden dabei durch die entsprechenden Aufnahmen bzw. seitlichen Stützelemente stabilisiert.

Bisher werden bei dieser Art des Transports die Pucks zu einer Behandlungsmaschine transportiert, die Behälter werden dort an die Behandlungsmaschine übergeben, indem sie aus den Pucks herausgehoben werden. In der Behandlungsmaschine laufen die Behälter beispielsweise auf einem Karussell. Nachdem die Behälter die Behandlungsmaschine durchlaufen haben, werden sie jeweils wieder in einen Puck gestellt. Die Entnahme der Behälter aus den Pucks erfolgt beispielsweise mittels eines Hebesterns, der die Behälter aus dem Puck hebt.

WO 2017/140397 A1 offenbart einen Transportstern zum Herausheben von Behältern aus Werkstückträgern und/oder zum Stellen von Behältern in Werkstückträger, wobei der Transportstern ein Unterteil zum Transportieren der Werkstückträger und eine Kurvensteuerung umfasst, wobei entlang der Kurvensteuerung Schlitten geführt werden, die in vertikaler Richtung bewegbar angeordnet sind, wobei die Kurvensteuerung die Schlitten bei einem kompletten Umlauf um den Transportstern vertikal anhebt und absenkt. WO 2014/161635 A1 bezieht sich auf eine Behälterbehandlungsmaschine umfassend ein um eine vertikale Maschinenachse umlaufendes Transportelement mit einer Vielzahl von Behandlungsstationen zum Behandeln von Behältern und einen einzigen Transferstern, mittels dem ein Zuführen der zu behandelnden Behälter zum Transportelement und das Abführen der bereits behandelten Behälter vom Transportelement erfolgt. Aus der EP 1 028 075 A1 zum Umdrehen von Behältern, zum Beispiel von Flaschen ohne flachen Boden, bekannt. Die WO2017/140397 A1 offenbart eine Transportvorrichtung gemäß dem Oberbegriff des Anspruchs 1 und ein Verfahren zum Transportieren von Pucks und Behältern gemäß dem Oberbegriff des Anspruchs 13.

Dabei werden typischerweise zwei separate Kreisläufe verwendet, einer an der Vorlaufseite und einer an der Rücklaufseite der Behandlungsmaschine. Die beiden Kreisläufe brauchen relativ viel Platz. Neben dem hohen Platzbedarf, besteht zudem das Problem, dass eine präzise Steuerung der Pucks bzw. des Puck-Flusses nötig ist, um die Behälter nach dem Durchlaufen der Behandlungsmaschine wieder in einen Puck zu setzen. Die Steuerung muss sicherstellen, dass jeder Puck genau an der richtigen Position ist, um einen Behälter im Auslauf der Behandlungsmaschine aufzunehmen. Solche Vorrichtungen und das entsprechende Steuerverfahren sind relativ kompliziert.

Die der Erfindung zugrunde liegende Aufgabe besteht also darin, eine Vorrichtung bereitzustellen, die einen platzsparenden und einfachen Aufbau ermöglichen, mit dem Behälter nach dem Durchlaufen einer Behandlungsmaschine wieder präzise in einen Puck gesetzt werden können. Die Aufgabe wird durch den Gegenstand der unabhängigen Ansprüche gelöst.

Die Transportvorrichtung ist derart ausgebildet, dass die Behälter an einem Einlauf der Behandlungsmaschine aus den Pucks entnommen werden und an einem Auslauf der Behandlungsmaschine wieder in die Pucks gesetzt werden, und dass die Pucks von dem Einlauf der Behandlungsmaschine bis zu dem Auslauf der Behandlungsmaschine umlaufend um die Behandlungsmaschine weiter transportierbar sind.

Die beanspruchte Transportvorrichtung hat den Vorteil, dass zum Transport der Pucks und gegebenenfalls der Behälter zur Behandlungsstrecke hin und von der Behandlungsstrecke weg lediglich ein einziger Puck-Kreislauf nötig ist. Dies ist im Vergleich zu zwei separaten Puck-Kreisläufen platzsparend, einerseits, weil die Pucks umlaufend um die Behandlungsmaschine transportiert werden, also in einem Bereich, der ohnehin schon genutzt wird, andererseits, weil nicht leere Pucks von der Behandlungsmaschine weg und zur Behandlungsmaschine hin transportiert werden müssen und somit Leerlauf reduziert wird.

Die Pucks können beispielsweise mittels eines Transportbands oder einer Förderkette gefördert werden, welches die Pucks entlang einer Transportstrecke mitzieht. Grundsätzlich sind auch andere Transportmechanismen, beispielsweise magnetischer Transport, möglich.

Die Transportvorrichtung kann derart ausgebildet sein, dass die Pucks im Betrieb entlang der Behandlungsstrecke vertikal versetzt zu den Behältern, insbesondere synchron mit den Behältern, mitgeführt werden.

Wenn Pucks vertikal versetzt zu den Behältern entlang der Behandlungsstrecke transportiert werden, hat dies den Vorteil, dass für den Transport der leeren Pucks zwischen Behandlungsmaschineneinlauf und Behandlungsmaschinenauslauf kein zusätzlicher Platzbedarf seitlich außerhalb der Behandlungsmaschine entsteht. Somit kann eine ideale Raumnutzung gewährleistet werden.

Beispielsweise können die Pucks unterhalb der Behälter mitgeführt werden. Dies hat den Vorteil, dass für die Übergabe der Behälter wenig Aufwand nötig ist, weil die Pucks für den stehenden Transport unterhalb der Behälter angeordnet sind und die Unterseite der Behälter aufnehmen. So reicht, je nach Mitführung der Pucks, gegebenenfalls eine rein vertikale Verschiebung der Behälter und/oder Pucks, um die Behälter aus den Pucks zu entnehmen oder in diese einzusetzen.

Die Transportvorrichtung kann derart ausgebildet sein, dass im Betrieb jedem Puck ein Behälter zugeordnet ist und jeder Puck vom Einlauf der Behandlungsmaschine zum Auslauf der Behandlungsmaschine synchron mit dem entsprechenden Behälter mit läuft und dass ein Puck und der Behälter vertikal versetzt zueinander transportiert werden.

Mit synchron mitlaufen ist gemeint, dass die Pucks so transportiert werden, dass nach dem Durchlaufen der Behandlungsstrecke ein Behälter wieder in den Puck gesetzt wird, aus dem er zuvor entnommen wurde. Beispielsweise kann die Transportvorrichtung derart ausgebildet sein, dass ein Puck sich, nachdem er um die Behandlungsmaschine umgelaufen ist, direkt unter dem Behälter befindet, der aus diesem Puck entnommen wurde, nachdem der Behälter die Behandlungsstrecke durchlaufen hat.

Insbesondere kann das synchrone Mitlaufen umfassen, dass die Relativposition zwischen einem Behälter und dem entsprechenden Puck lediglich in vertikaler Richtung verändert wird, so dass die Pucks genau unterhalb dem jeweils zugeordneten Behälter transportiert werden.

Durch den Transport der Pucks synchron mit den Behältern entlang der Behandlungsstrecke wird sichergestellt, dass die relative Position der Pucks und Behälter im Auslauf geeignet ist, damit die Behälter wieder in die entsprechenden Pucks gesetzt werden können, ohne zusätzliche Transportwege zu erfordern. So kann auf eine Steuerung der Pucks, sowie auf zusätzliche Transportmedien verzichtet werden und der Platzbedarf ist gering. Außerdem kann die Zuordnung von Behälter zum Puck für Qualitätssicherungsprozesse (Produktsicherheit, Produkthaftung, Chargennachverfolgung usw.) von extremer Bedeutung sein.

Die Transportvorrichtung kann eine Mitführeinrichtung umfassen, die derart ausgebildet ist, dass die Pucks im Betrieb entlang der Behandlungsstrecke vertikal versetzt zu den Behältern, insbesondere synchron mit den Behältern, mitgeführt werden. Insbesondere kann die Mitführeinrichtung einen Mitnahmestern oder einen Drehstellmotor umfassen.

Insbesondere kann die Mitführeinrichtung derart ausgebildet sein, dass die Pucks im Betrieb entlang der Behandlungsstrecke vertikal versetzt zu den Behältern und synchron mit den Behältern mitgeführt werden.

Die Mitführeinrichtung kann derart ausgebildet sein, dass im Betrieb die Relativposition zwischen einem Puck und dem Behälter, der aus diesem Puck entnommen wurde, beim Transport entlang der Behandlungsstrecke unverändert bleibt. Das heißt, dass im Verlauf der Behandlungsstrecke, also solange die Behälter in der Behandlungsmaschine transportiert werden, die Pucks so mitgeführt werden, dass sich ihre relative Position bezogen auf die Behälter nicht verändert. So wird gewährleistet, dass die Pucks und die jeweiligen Behälter jeweils ohne weitere Steuerung zeitglich und an geeigneter Stelle im Auslauf der Behandlungsmaschine ankommen.

Die Mitführeinrichtung kann derart ausgebildet sein, dass eine mechanisch starre Koppelung zwischen der Position der Pucks und Behälter-Halteelementen der Behandlungsmaschine vorliegt. Dies ermöglicht eine besonders einfache Synchronisierung der Bewegung von Pucks und Behältern und somit auch eine einfache und präzise Übergabe der Behälter nach Durchlaufen der Behandlungsstrecke. Die Behälter-Halteelemente können im Prinzip beliebige Elemente sein, die die Behälter beim Transport entlang der Behandlungsstrecke halten, beispielsweise Klammern oder Zentrierelemente umfassen.

Die Transportvorrichtung kann wenigstens eine Puck-Hubeinrichtung, die zum Verstellen der vertikalen Position der Pucks ausgebildet ist, umfassen. Somit können die Pucks für den Transport umlaufend um die Behandlungsmaschine in eine Position gebracht werden, wo sie keine Prozessschritte in der Behandlungsmaschine behindern, insbesondere unterhalb bzw. außer Reichweite der beweglichen Bestandteile der Behandlungsmaschine.

Wie oben beschrieben ist die Transportvorrichtung derart ausgebildet ist, dass die Behälter beim Durchlaufen der Behandlungsstrecke aus den Pucks entnommen sind. Die Transportvorrichtung kann dazu derart ausgebildet sein, dass Behälter zumindest nach einer Entnahme aus den Pucks und vor einer Übergabe an die Behandlungsmaschine und nach einer Übernahme aus der Behandlungsmaschine und vor einer Übergabe an die Pucks hängend transportiert werden.

Die Puck-Hubeinrichtung kann derart ausgebildet und im Betrieb derart angeordnet sein, dass die Pucks dort abgesenkt werden, wo die Behälter zum hängenden Transport gegriffen werden, und/oder dass die Pucks derart angehoben werden, dass sie auf Höhe der Behälter sind, wenn diese nach dem hängenden Transport losgelassen werden.

So kann eine besonders zuverlässige Übergabe der Behälter ermöglicht werden, bei der diese nur dann nicht durch die Pucks gestützt werden, wenn sie tatsächlich für den hängenden Transport gegriffen werden bzw. von den Behälter-Halteelementen in der Behandlungsmaschine gehalten werden.

Die Transportvorrichtung kann also beispielsweise derart ausgebildet sein, dass die Pucks nach Übergabe der Behälter im Einlauf abgesenkt, die Pucks in einer Ebene unter den Behältern mitgeführt, und vor Übernahme der Behälter im Auslauf wieder angehoben werden.

Hier sei angemerkt, dass alternativ mittels einer Behälter-Hubeinrichtung die Behälter aus den Pucks gehoben, in einer Ebene oberhalb der Pucks transportiert und im Auslauf wieder abgesenkt und in die Pucks gesetzt werden können. Verschiedene andere Kombinationen sind denkbar, beispielsweise, dass die Behälter im Einlauf angehoben werden und die Pucks im Einlauf abgesenkt werden und entsprechen im Auslauf die Behälter abgesenkt und die Pucks angehoben werden.

Die Puck-Hubeinrichtung kann derart ausgebildet und im Betrieb derart angeordnet sein, dass die Pucks so weit abgesenkt werden, dass die Behälter aus den Pucks entnommen werden, bzw. so weit angehoben werden, dass die Behälter in den Puck gesetzt werden.

Dies stellt sicher, dass auf der Bearbeitungsstrecke die Pucks nicht mehr mit den Behältern interagieren, diese also weder seitlich noch von unten stützen, und dass die Behälter nach dem Transport entlang der Behandlungsstrecke sicher im Puck gesetzt werden, bevor sie losgelassen werden.

Die wenigstens eine Puck-Hubeinrichtung kann eine erste Puck-Hubeinrichtung, die derart ausgebildet und im Betrieb derart angeordnet ist, dass die Pucks dort abgesenkt werden, wo die Behälter zum hängenden Transport gegriffen werden, und eine zweite Puck-Hubeinrichtung, die derart ausgebildet und im Betrieb derart angeordnet ist, dass die Pucks derart angehoben werden, dass sie auf Höhe der Behälter sind, wenn diese nach dem hängenden Transport losgelassen werden, umfassen.

Zwei separate Hubeinrichtungen vorzusehen, sorgt für einen relativ flexiblen Aufbau, der ermöglicht, dass der Einlauf und Auslauf der Behandlungsmaschine an beliebigen Positionen sein kann. Außerdem kann die entsprechende Anfangs- und Endhöhe der Pucks dann separat eingestellt werden.

Die Puck-Hubeinrichtung kann einen Hebestern umfassen. Ein Hebestern ist dabei ein Stern, beispielsweise ein Einlaufstern, ein Auslaufstern oder ein Zwischenstern, der bereits einen HubMechanismus bereit stellt.

Die Transportvorrichtung kann einen Einlaufstern, einem Auslaufstern und/oder einen Zwischenstern umfassen, wobei eine der Puck-Hubeinrichtungen integral mit dem Einlaufstern, dem Auslaufstern oder dem Zwischenstern ausgebildet oder an diesem befestigt ist.

Die Puck-Hubeinrichtung kann die erste und die zweite Puck-Hubeinrichtung umfassen und die erste Puck-Hubeinrichtung kann integral mit dem Einlaufstern ausgebildet oder an diesem befestigt sein und die zweite Puck-Hubeinrichtung kann integral mit dem Auslaufstern ausgebildet oder an diesem befestigt sein.

Im Betrieb können dann die Pucks unmittelbar unterhalb der einlaufenden Behälter abgesenkt werden während sie, wie die Behälter, um den Einlaufstern umlaufen. Das vereinfacht insbesondere den oben beschriebenen synchronen Transport der Pucks, weil die Relativposition sich nur in vertikaler Richtung ändert und in horizontaler Richtung durch die Geometrie des Einlaufsterns fest vorgegeben ist. Dies gilt analog für den Auslaufstern, da hier die Pucks dann exakt unterhalb der auslaufenden Behälter um den Auslaufstern umlaufen und dabei angehoben werden.

Die Puck-Hubeinrichtung kann integral mit dem Zwischenstern ausgebildet oder an diesem befestigt und derart ausgebildet und im Betrieb derart angeordnet sein, dass sie die Pucks für die Übergabe der Behälter zum hängenden Transport anhebt und/oder nach der Übernahme der Behälter nach dem hängenden Transport absenkt. Insbesondere kann ein Zwischenstern in Form eines Hebesterns, beispielsweise zum Anheben der Pucks oder der Behälter, ausgebildet sein. Beispielsweise kann, wenn der Zwischenstern die Puck-Hubeinrichtung umfasst, die Transportvorrichtung eine Greifeinrichtung umfassen, die beispielsweise Teil des Zwischensterns oder an diesem angebracht sein kann. Die Greifeinrichtung kann dann so ausgebildet sein, dass sie Greifelemente umfasst, wobei ein Greifelement im Betrieb einen Behälter aus dem Puck entnimmt und ihn zum Einlaufstern übergibt. Der Auslaufstern übergibt nachfolgend den Behälter wieder an eines der Greifelemente. Das Greifelement setzt den Behälter wieder in den Puck.

Zwischensterne sind dabei Sterne, die bei der Übergabe an den Einlaufstern und/oder der Übernahme von dem Auslaufstern das Gegenstück zum Einlaufstern und/oder Auslaufstern bildet bzw. bilden.

Insbesondere kann ein Zwischenstern vorgesehen sein, der zum gleichzeitigen Übergeben von Behältern an einen Einlaufstern und Entnehmen von Behältern aus einem Auslaufstern ausgebildet ist. Dann kann eine Puck-Hubeinrichtung integral mit dem Zwischenstern ausgebildet oder an diesem befestigt sein und zum zeitgleichen Absenken von Pucks im Einlauf und Anheben von Pucks im Auslauf der Behandlungsmaschine ausgebildet sein.

Bisher ist bekannt, dem Einlaufstern und dem Auslaufstern jeweils einen eigenen Zwischenstern zuzuordnen, mit dem Behälter an den Einlaufstern übergeben bzw. aus dem Auslaufstern entnommen werden. Ein wie oben beschriebener Zwischenstern, der zugleich dem Einlauf und dem Auslauf zugeordnet ist, hat im Vergleich dazu den Vorteil, dass ein Zwischenstern gespart werden kann. Daraus ergeben sich niedrigere Investitionskosten, niedrigere Betriebskosten, kürzere Umstellzeiten beim Garniturwechsel und ein geringerer Platzbedarf. Besonders deutlich macht sich das bemerkbar, wenn der Zwischenstern ein Hebestern ist. Hebesterne haben relativ hohe Herstellungskosten. Somit können also Investitionskosten besonders stark reduziert werden, wenn ein Hebestern zum gleichzeitigen Übergeben und Entnehmen von Behältern vorgesehen ist.

Es kann eine Adapterplatte vorgesehen sein, mittels derer eine Sternstellung eingestellt werden kann. Die Sternstellung ist abhängig vom Teilungsabstand der Behandlungsmaschine und des Teilkreises des Zentralsterns, wobei der Teilkreisdurchmesser des Zentralsterns vom erforderlichen Hub sowie der Länge der Pucks und von der Anzahl und Länge der Teilungen abhängt.

Die Transportvorrichtung kann eine Mehrzahl von Greifelementen, die zum Greifen der Behälter zum hängenden Transport ausgebildet sind, und eine Greifelement-Hubeinrichtung umfassen, die derart ausgebildet und im Betrieb derart angeordnet ist, dass die Greifelemente nach dem Greifen der Behälter so weit angehoben werden, dass die Behälter aus den Pucks entnommen werden, und/oder vor dem Loslassen der Behälter nach dem hängenden Transport so weit abgesenkt werden, dass die Behälter in den Puck gesetzt werden.

Die oben im Zusammenhang mit der Puck-Hubeinrichtung genannten Merkmale gelten hier entsprechend. Das heißt, beispielsweise kann die Greifelement-Hubeinrichtung integral mit einem Einlaufstern, einen Auslaufstern oder einem Zwischenstern ausgebildet oder daran befestigt sein. Die Greifelement-Hubeinrichtung kann, ähnlich wie die Hubeinrichtung für die Pucks einteilig oder mehrteilig ausgebildet sein.

Wenn die Transportvorrichtung im Einlauf oder im Auslauf der Behandlungsmaschinen jeweils eine Greifelement-Hubeinrichtung und eine Puck-Hubeinrichtung umfasst, so können diese so ausgebildet sein, dass die Pucks und die Greifelemente in vertikaler Richtung gegenläufig bewegt werden. So könne zugleich die Pucks abgesenkt und die Greifelemente angehoben werden oder umgekehrt. Insbesondere können die beiden Hubeinrichtungen in genau einem Stern integral ausgebildet oder an genau einem Stern befestigt sein. Dies ist besonders platzsparend.

Ein mögliches Verfahren zum Transportieren von Pucks und Behältern beispielsweise mit einer der oben genannten Vorrichtungen umfasst, dass Behälter jeweils in einem Puck stehend zu einer Behandlungsstrecke einer Behandlungsmaschine transportiert werden, entlang der Behandlungsstrecke transportiert werden und jeweils in einem Puck stehend von der Behandlungsstrecke weg transportiert werden, wobei die Behälter beim Durchlaufen der Behandlungsstrecke aus den Pucks entnommen sind. Die Pucks werden von einem Einlauf der Behandlungsmaschine, wo die Behälter aus dem Puck entnommen werden, bis zu einem Auslauf der Behandlungsmaschine, wo die Behälter wieder in die Pucks gesetzt werden, umlaufend um die Behandlungsmaschine weiter transportiert.

Die Pucks können entlang der Behandlungsstrecke vertikal versetzt zu den Behältern, insbesondere synchron mit den Behältern, mitgeführt werden.

Die Behälter können zumindest nach einer Entnahme aus den Pucks und vor einer Übergabe an die Behandlungsmaschine und nach einer Übernahme aus der Behandlungsmaschine und vor einer Übergabe an die Pucks hängend transportiert werden. Die Pucks können abgesenkt werden, wenn die Behälter zum hängenden Transport gegriffen wurden, und nach dem Mitführen entlang der Behandlungsstrecke derart angehoben werden, dass sie auf Höhe der Behälter sind, wenn diese nach dem hängenden Transport losgelassen werden. Alternativ oder zusätzlich können, ähnlich wie im Zusammenhang mit der Vorrichtung beschrieben auch die Behälter angehoben und anschließend wieder abgesenkt werden.

Die Pucks können derart transportiert werden, dass je ein Puck bei der Übernahme der Behälter nach dem hängenden Transport, direkt unterhalb eines Behälters, also nicht horizontal versetzt zu dem Behälter, angeordnet ist.

Es versteht sich, dass die im Zusammenhang mit der Vorrichtung genannten Merkmale und Vorteile ebenso auf das Verfahren anwendbar sind.

Weitere Merkmale und Vorteile werden nachfolgend anhand der beispielhaften Figuren erläutert. Dabei zeigen:
- Figuren 1a und 1b: eine schematische, nicht maßstabsgetreue Draufsicht und Schrägansicht eines Ausführungsbeispiels der Transportvorrichtung;
- Figur 2: eine schematische, nicht maßstabsgetreue Schrägansicht einer ersten Hubeinrichtung;
- Figur 3: eine schematische, nicht maßstabsgetreue Schrägansicht einer zweiten Hubeinrichtung.

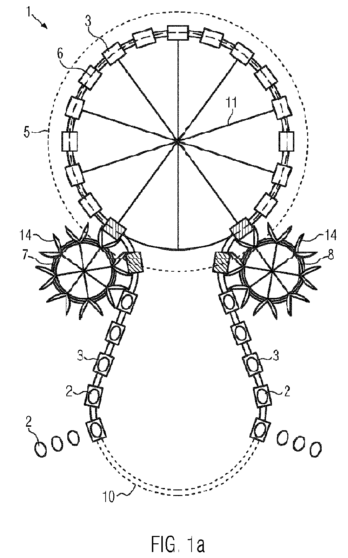

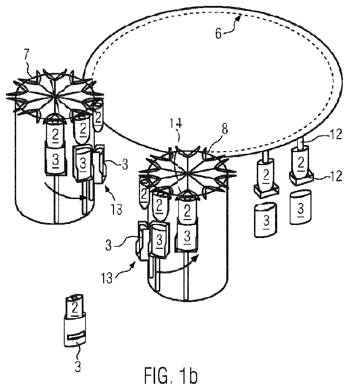

In Figur 1 ist ein Ausführungsbeispiel für eine Transportvorrichtung 1 zum Transportieren von Behältern 2 mit einer Mehrzahl von Pucks 3 zum Aufnehmen und stehenden Transport eines Behälters gezeigt.

Wie in der Schrägansicht in Figur 1b zu erkennen ist, sind die Pucks so ausgebildet, dass der untere Teil der Behälter in einer Aufnahme steht und durch die Wände der Aufnahme seitlich gestützt wird.

Die Pucks werden beispielsweise mittels eines oder mehrerer unterhalb der Pucks angeordneten Transportbändern zum Fördern der Pucks transportiert, beispielsweise durch Mitziehen der Pucks. Das bzw. die Transportbänder verlaufen typischerweise horizontal, das heißt, sie werden nicht mit den Pucks angehoben. Um den Transport der Pucks auf verschiedenen Ebenen umzusetzen, kann im Bereich der Behandlungsstrecke ein anderes Transportband vorgesehen sein als im Einlauf und Auslauf und die beiden Transportbänder können auf unterschiedlicher Höhe verlaufen. Alternativ zu Transportbändern können beispielweise auch eine oder mehrere Förderketten oder andere Förderelemente vorgesehen sein.

In den Pucks sind hier beispielhaft Behälter in Form von Flaschen dargestellt, wobei die Pucks auch zum Transportieren anderer Behälter ausgebildet sein können.

Es sei angemerkt, dass in der Draufsicht in Figur 1a die Pucks, bei denen die Behälter gerade entnommen werden, schraffiert dargestellt sind, während in dem Bereich, in dem Behälter in den Pucks stehend transportiert werden, Behälter dargestellt sind und in dem Bereich, in dem die Behälter in der Behandlungsmaschine aus den Pucks entnommen transportiert werden, keine Pucks ohne Behälter gezeigt sind.

In Figur 1a sind außerdem eine Behandlungsmaschine 5, die nicht Teil der Transportvorrichtung ist, und eine Behandlungsstrecke, die hier als gestrichelte Linie mit dem Bezugszeichen 6 gekennzeichnet ist, angedeutet. Die Behandlungsstrecke erstreckt sich vom Einlauf der Behandlungsmaschine zum Auslauf der Behandlungsmaschine, insbesondere im hier gezeigten Beispiel von einem Einlaufstern 7 zu einem Auslaufstern 8. Bei der Behandlungsmaschine kann es sich um einen Rundläufer handeln. Die Behandlungsmaschine kann beispielsweise eine Direktdruckmaschine, ein Etikettierer oder eine Inspektionsmaschine sein. In der Behandlungsmaschine werden Behälter entlang der Behandlungsstrecke transportiert und behandelt, also beispielsweise bedruckt, etikettiert oder inspiziert.

Die Transportvorrichtung ist hier derart ausgebildet, dass die Behälter beim Durchlaufen der Behandlungsstrecke aus den Pucks entnommen sind, und beispielsweise von Halteelementen der Behandlungsmaschine gehalten werden.

Die Transportvorrichtung ist derart ausgebildet, dass die Behälter mittels der Pucks zu der Behandlungsstrecke hin und von der Behandlungsstrecke weg transportierbar sind.

Insbesondere transportiert die Transportvorrichtung die Pucks entlang einer Transportstrecke, die mit dem Bezugszeichen 10 gekennzeichnet ist, und ist derart ausgebildet, dass die Pucks von einem Einlauf der Behandlungsmaschine, wo im Betrieb die Behälter aus dem Puck entnommen werden, bis zu einem Auslauf der Behandlungsmaschine, wo im Betrieb die Behälter wieder in die Pucks gesetzt werden, umlaufend um die Behandlungsmaschine weiter transportierbar sind.

In Figur 1b ist beispielhaft gezeigt, dass die Pucks im Bereich der Behandlungsstrecke unterhalb der Behälter, vertikal zu den Behältern versetzt und synchron mit den Behältern weiter transportiert werden.

In dem in Figuren 1a und 1b gezeigten Beispiel verläuft die Transportstrecke der Pucks zum Einlauf der Behandlungsmaschine hin, insbesondere zu dem Einlaufstern hin und teilweise um den Einlaufstern herum. Anschließend verläuft, wie oben erläutert, die Transportstrecke parallel zu der Behandlungsstrecke der Behälter, derart, dass die Pucks im Betrieb vertikal nach unten versetzt zu und synchron mit den Behältern transportiert werden. Die Transportstrecke verläuft weiter zum Auslauf der Behandlungsmaschine, hier insbesondere zu dem Auslaufstern und teilweise um den Auslaufstern herum. Anschließend verläuft die Transportstrecke von der Behandlungsmaschine weg.

Die Transportstrecke der Pucks bildet in diesem Beispiel einen Kreislauf, der hier durch eine gestrichelte Linie angedeutet ist, um zu verdeutlichen, dass für die Erfindung der übrige Verlauf der Transportstrecke (also vor dem Einlauf bzw. nach dem Auslauf der Behandlungsmaschine) nicht entscheidend ist. Es sei angemerkt, dass die Behälter an beliebigen Stellen der Transportstrecke zugeführt und entnommen werden können.

Im oben genannten Beispiel, in dem die Pucks unterhalb der Behälter und synchron mit den Behältern mit transportiert werden, bleibt im Betrieb die Relativposition zwischen einem Puck und dem Behälter, der aus diesem Puck entnommen wurde, beim Transport entlang der Behandlungsstrecke unverändert.

In Figur 1 ist ebenfalls gezeigt, dass die Transportvorrichtung eine Mitführeinrichtung 11 umfasst, die zum Mitführen der Pucks mit den Behältern entlang der Behandlungsstrecke, in diesem Beispiel synchron mit und vertikal nach unten versetzt zu den Behältern, ausgebildet ist.

Beispielsweise kann die Mitführeinrichtung derart ausgebildet sein, dass eine starre Koppelung zwischen der Position der Pucks und Behälter-Halteelementen 12 der Behandlungsmaschine vorliegt. Bei diesen Halteelementen kann es sich beispielsweise um Klammern handeln, die die Behälter greifen, oder wie in der Figur angedeutet, um Zentrierelemente für Behälter. Bei einem Rundläufer können die Halteelemente beispielsweise an einem Karussell befestigt oder Teil eines Karussells sein.

Im Beispiel des hier beschriebenen Rundläufers ist die Mitführeinrichtung in Form eines Mitnahmesterns gezeigt. Ein Mitnahmestern koppelt in diesem Beispiel die Drehung eines Karussells der Behandlungsmaschine, an dem die Behälter-Halteelemente befestigt sind und welches im Betrieb die Behälter transportiert, starr mit der Bewegung der Pucks. Alternativ kann beispielsweise auch ein Drehstellmotor für die Mitführung verwendet werden.

Weiterhin ist auch denkbar, dass die Transportstrecke der Pucks so ausgelegt ist, dass keine Mitführeinrichtung erforderlich ist, beispielsweise derart, dass allein durch den Abstand der Pucks und die Länge der Transportstrecke und die Transportgeschwindigkeit der Pucks sichergestellt ist, dass die Pucks zu einem geeigneten Zeitpunkt wieder an entsprechender Stelle im Auslauf der Behandlungsmaschine angelangen. Grundsätzlich ist auch eine entsprechende Steuerung möglich.

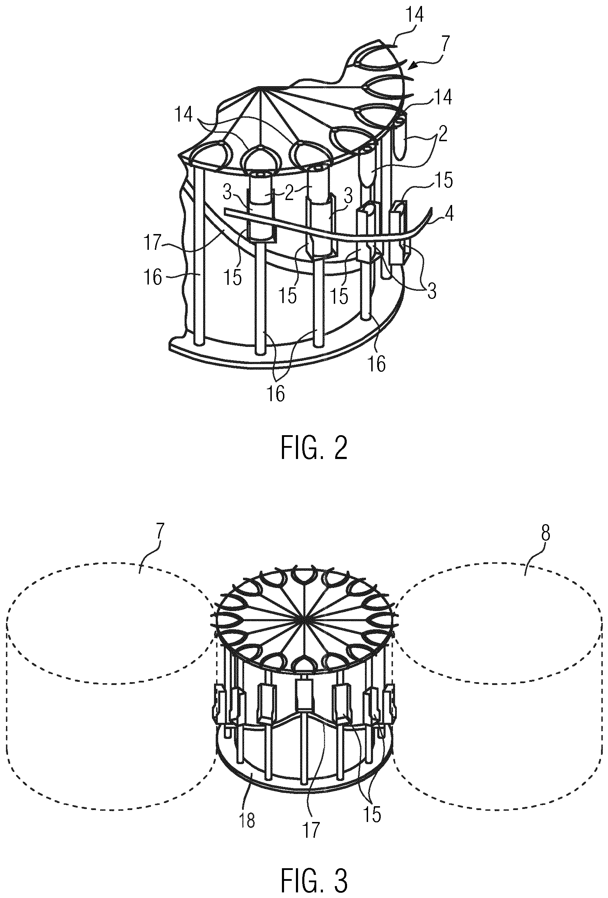

In dem oben beschriebenen und in Figur 1b gezeigten Beispiel werden die Pucks vertikal versetzt zu den Behältern transportiert. Um den vertikalen Versatz herzustellen, kann die Transportvorrichtung wenigstens eine Puck-Hubeinrichtung, die zum Verstellen der vertikalen Position der Pucks ausgebildet ist, umfassen. Die Puck-Hubeinrichtung 13 ist hier nur schematisch angedeutet. Mögliche Ausgestaltungen der Puck-Hubeinrichtung sind in Figur 2 und Figur 3 gezeigt.

Im hier gezeigten Beispiel werden die Behälter zumindest nach einer Entnahme aus den Pucks und vor einer Übergabe an die Behandlungsmaschine und nach einer Übernahme aus der Behandlungsmaschine und vor einer Übergabe an die Pucks hängend transportiert.

Die in Figur 1 gezeigte Transportvorrichtung umfasst mindestens zwei Puck-Hubeinrichtungen. Eine erste Puck-Hubeinrichtung ist derart ausgebildet und im Betrieb derart angeordnet, dass die Pucks dort abgesenkt werden, wo die Behälter zum hängenden Transport gegriffen werden. Das heißt, die erste Puck-Hubeinrichtung ist hier im Einlauf der Behandlungsmaschine angeordnet. Die zweite Puck-Hubeinrichtung ist derart ausgebildet und im Betrieb derart angeordnet, dass die Pucks derart angehoben werden, dass sie auf Höhe der Behälter sind, wenn diese nach dem hängenden Transport losgelassen werden. Das heißt, die zweite Puck-Hubeinrichtung ist hier im Auslauf der Behandlungsmaschine angeordnet.

Die erste Puck-Hubeinrichtung ist derart ausgebildet und angeordnet, dass die Pucks so weit abgesenkt werden, dass die Behälter aus den Pucks entnommen werden. Hier werden die Pucks beispielsweise mindestens soweit abgesenkt, bis Oberkante der Aufnahmen für die Behälter unterhalb der Unterkante der Behälter angeordnet ist. Wie weit die Pucks abgesenkt werden hängt in der Praxis davon ab, wie die Behandlungsmaschine ausgelegt ist. Es sollte sichergestellt werden, dass die Funktion der Behandlungsmaschine durch die Pucks nicht beeinträchtigt wird.

Die zweite Puck-Hubeinrichtung ist hier derart ausgebildet und angeordnet, dass die Pucks so weit angehoben werden, dass die Behälter in den Puck gesetzt werden. Das heißt, die Pucks werden so weit angehoben, dass die Behälter wieder in der Aufnahme aufgenommen sind, wenn die Behälter losgelassen werden.

Es sei angemerkt, dass auch denkbar ist, dass nicht oder nicht ausschließlich die Pucks abgesenkt und anschließend wieder angehoben werden sondern alternativ oder zusätzlich die Behälter angehoben und anschließend wieder abgesenkt werden. Dazu kann eine hier nicht gezeigte Greifelement-Hubeinrichtung vorgesehen sein, die eine Mehrzahl von Greifelementen 14, die zum Greifen der Behälter zum hängenden Transport ausgebildet sind, anhebt und/oder absenkt.

Figur 2 zeigt eine mögliche Ausgestaltung einer Puck-Hubeinrichtung, die für die oben beschriebene oder einer anderen erfindungsgemäße Transportvorrichtung verwendet werden kann.

In diesem Beispiel ist die Puck-Hubeinrichtung an einem Stern, beispielsweise einem Einlaufstern, einem Auslaufstern oder einem Zwischenstern befestigt. In der Figur ist beispielhaft ein Einlaufstern 7 gezeigt, wobei die Puck-Hubeinrichtung für andere Arten von Sternen analog ausgebildet sein kann.

In der Figur sind die Greifelemente 14 des Einlaufsterns gezeigt, die zum Greifen der Behälter 2 für den hängenden Transport ausgebildet sind. In diesem Beispiel werden die Behälter nicht angehoben und entsprechend gibt es keine Greifelement-Hubeinrichtung. Optional könnte jedoch eine solche Hubeinrichtung für die Greifelemente vorgesehen sein.

Unterhalb der Greifelemente sind Aufnahmeelemente 15 zum Aufnehmen von Pucks vorgesehen, die hier beispielsweise an vertikal verlaufenden Stangen 16 vertikal verschiebbar angebracht sind. Die Aufnahmeelemente sind nach oben und vorne offen und derart ausgebildet, dass sie je einen Puck 3 aufnehmen können.. Optional können die Aufnahmen, wie hier gezeigt Rückwände aufweisen, durch die die vertikalen Stangen verlaufen. Die Aufnahmen führen die Pucks entlang des Einlaufsterns nach unten, wozu beispielsweise eine Kurvenführung 17 vorgesehen sein kann. Außerdem ist in der Figur ein Führungselement 4 dargestellt, welches umfänglich am Stern derart angeordnet ist, dass die in den Aufnahmen transportierten Pucks nicht nach außen aus den Aufnahmen rutschen können.

In dem gezeigten Beispiel werden durch die Kurvenführung die Aufnahmen entlang der vertikal verlaufenden Stangen geführt nach unten bewegt. Die Pucks werden dabei durch die Aufnahmen gestützt und durch die Führung 4 geführt abgesenkt. Die Kurvenführung kann so angeordnet und ausgebildet sein, dass die (jetzt leeren) Aufnahmen nach dem Absenken der Pucks entlang der vertikal verlaufenden Stangen in die höhere Position, in der einlaufende Pucks aufgenommen werden, angehoben heben.

Figur 3 zeigt schematisch eine weitere mögliche Ausgestaltung einer Puck-Hubeinrichtung, die für die oben beschriebene oder einer anderen erfindungsgemäßen Transportvorrichtung verwendet werden kann. Hier ist die Puck-Hubeinrichtung derart ausgebildet, dass sie die Pucks für die Übergabe der Behälter zum hängenden Transport absenkt und nach der Übernahme der Behälter nach dem hängenden Transport anhebt.

In diesem Beispiel umfasst die Transportvorrichtung einen Zwischenstern 18, der in diesem Beispiel das Gegenstück zum Einlaufstern und zum Auslaufstern darstellt. Alternativ kann auch je ein Zwischenstern für den Einlaufstern und den Auslaufstern vorgesehen sein.

Der Zwischenstern ist hier in Form eines Hebesterns ausgebildet und die Puck-Hubeinrichtung umfasst den Hebestern. Hier werden die Pucks mit einem ähnlichen Mechanismus wie beim Einlaufstern angehoben. Die Kurvenführung ist hier derart ausgebildet, dass die Pucks einlaufseitig abgesenkt und auslaufseitig geeignet wieder angehoben werden, was nach dem gleichen Prinzip funktionieren kann, wie oben im Zusammenhang mit dem Einlaufstern beschrieben. So ist es nicht nötig, sowohl den Einlaufstern als auch den Auslaufstern zum Anheben bzw. Absenken der Pucks auszugestalten. Es genügt vielmehr einen einzigen Stern, den Zwischenstern, entsprechend zu gestalten. Es ist ebenfalls denkbar, dass der Zwischenstern alternativ oder zusätzlich die Behälter anhebt und absenkt.

In den oben genannten Beispielen können zum Führen der Pucks auf dem Tarnsportband feststehende Führungsbögen mit Verschleißstreifen vorgesehen sein, die je nach Bedarf auf unterschiedlicher Höhe angeordnet sind.

In den oben beschriebenen Beispielen sind Pucks gezeigt, die an gegenüberliegenden Außenwänden optional vorgesehene Nuten aufweisen. Am Führungsbogen oder am Hebestern, beispielsweise an der Kurvenführung, kann eine Führungsschiene befestigt sein (hier nicht gezeigt), welche in die Nut des Pucks greift. Dadurch können die Pucks stabilisiert werden und insbesondere kann sicher gestellt werden, dass beim Entnehmen eines Behälters der jeweilige Puck nicht vom Transportband abhebt.

Damit der Puck bei der Entnahme im Hebestern auf Teilung bleibt, kann optional eine in den Figuren nicht gezeigte Mitnehmerscheibe am Hebestern vorgesehen sein, die die Pucks mitführt.

Im Folgenden wird ein beispielhaftes Verfahren zum Transportieren von Behältern beschrieben. Das Verfahren kann beispielsweise unter Verwendung einer der oben beschriebenen Vorrichtungen durchgeführt werden.

In dem beispielhaften Verfahren werden Behälter jeweils in einem Puck stehend zu einer Behandlungsstrecke einer Behandlungsmaschine transportiert, entlang der Behandlungsstrecke transportiert und jeweils in einem Puck stehend von der Behandlungsstrecke weg transportiert. Die Behälter sind dabei beim Durchlaufen der Behandlungsstrecke aus den Pucks entnommen. Die Pucks werden dabei von einem Einlauf der Behandlungsmaschine, wo die Behälter aus dem Puck entnommen werden, bis zu einem Auslauf der Behandlungsmaschine, wo die Behälter wieder in die Pucks gesetzt werden, umlaufend um die Behandlungsmaschine weiter transportiert.

Insbesondere können die Pucks entlang der Behandlungsstrecke vertikal versetzt zu den Behältern mitgeführt werden. Das heißt, die Pucks können beispielsweise unterhalb der Behälter und parallel zu der Behandlungsstrecke der Behälter transportiert werden, insbesondere synchron mit den Behältern.

Die Behälter können zumindest nach einer Entnahme aus den Pucks und vor einer Übergabe an die Behandlungsmaschine und nach einer Übernahme aus der Behandlungsmaschine und vor einer Übergabe an die Pucks hängend transportiert werden. Zusätzlich können die Behälter optional auch in der Behandlungsmaschine hängend transportiert werden.

Die Behälter können insbesondere im Bereich des Einlaufs der Behandlungsmaschine zum hängenden Transport gegriffen werden und dann die Pucks so weit abgesenkt werden, dass die Behälter vollständig aus dem Puck entnommen sind. Dann können die Pucks auf dieser Höhe weiterlaufen, während die Behälter die Behandlungsstrecke durchlaufen, und wieder angehoben werden, wenn die Behälter die Behandlungsstrecke durchlaufen haben. Im Auslauf der Behandlungsmaschine können die Behälter dann zum stehenden Transport wieder in die Pucks gesetzt werden.

Dazu werden die Pucks so angehoben, dass sie auf Höhe der Behälter sind, wenn diese losgelassen werden. Mit anderen Worten werden die Behälter erst dann losgelassen, wenn die Pucks die Behälter wieder stützen.

Das geeignete Absenken und Anheben kann beispielsweise mittels einer im Zusammenhang mit der Vorrichtung beschriebenen Puck-Hubeinrichtung erfolgen.

Die Pucks werden so transportiert, dass sie beim Übernehmen der Behälter direkt unterhalb der Behälter angeordnet sind, also nicht horizontal versetzt zu den Behältern. Dies kann beispielweise durch geeignete Steuerung oder mit einer oben im Zusammenhang mit der Vorrichtung beschriebenen Mitführeinrichtung erfolgen.

Alternativ oder zusätzlich können, ähnlich wie im Zusammenhang mit der Vorrichtung beschrieben auch die Behälter angehoben und anschließend wieder abgesenkt werden.

Es versteht sich, dass in den zuvor beschriebenen Ausführungsbeispielen genannte Merkmale nicht auf diese speziellen Kombinationen beschränkt sind und auch in beliebigen anderen Kombinationen möglich sind.

## Patentansprüche

1. Transportvorrichtung (1) zum Transportieren von Behältern (2) mit einer Mehrzahl von Pucks (3), die jeweils zum Aufnehmen und stehenden Transport eines Behälters (2) ausgebildet sind,
wobei die Transportvorrichtung (1) derart ausgebildet ist, dass die Behälter (2) mittels der Pucks (3) zu einer Behandlungsstrecke (6) einer Behandlungsmaschine (5) hin und von der Behandlungsstrecke (6) weg transportierbar sind und
wobei die Transportvorrichtung (1) derart ausgebildet ist, dass die Behälter (2) beim Durchlaufen der Behandlungsstrecke (6) aus den Pucks (3) entnommen sind,
wobei die Transportvorrichtung (1) derart ausgebildet ist, dass die Behälter (2) an einem Einlauf der Behandlungsmaschine (5) aus den Pucks (3) entnommen werden und an einem Auslauf der Behandlungsmaschine (5) wieder in die Pucks (3) gesetzt werden, und
**dadurch gekennzeichnet, dass** die Pucks (3) von dem Einlauf der Behandlungsmaschine (5) bis zu dem Auslauf der Behandlungsmaschine (5) umlaufend um die Behandlungsmaschine (5) weiter transportierbar sind.

2. Transportvorrichtung (1) nach Anspruch 1, wobei die Transportvorrichtung (1) derart ausgebildet ist, dass die Pucks (3) im Betrieb entlang der Behandlungsstrecke (6) vertikal versetzt zu den Behältern (2), insbesondere synchron mit den Behältern (2), mittels einer Mitführeinrichtung (11) mitgeführt werden, wobei die Mitführeinrichtung (11) insbesondere einen Mitnahmestern oder einen Drehstellmotor umfasst.

3. Transportvorrichtung (1) nach Anspruch 2, wobei die Transportvorrichtung (1) derart ausgebildet ist, dass im Betrieb die Relativposition zwischen einem Puck (3) und dem Behälter, der aus diesem Puck (3) entnommen wurde, beim Transport entlang der Behandlungsstrecke (6) unverändert bleibt.

4. Transportvorrichtung (1) nach einem der vorangegangenen Ansprüche, umfassend eine bzw. die Mitführeinrichtung (11), wobei die Mitführeinrichtung (11) derart ausgebildet ist, dass eine mechanisch starre Koppelung zwischen der Position der Pucks (3) und Behälter-Halteelementen (12) der Behandlungsmaschine (5) vorliegt oder dass die Mitführeinrichtung (11) einen separaten Antrieb umfasst.

5. Transportvorrichtung (1) nach einem der vorangegangenen Ansprüche, umfassend wenigstens eine Puck-Hubeinrichtung (13), die zum Verstellen der vertikalen Position der Pucks (3) ausgebildet ist.

6. Transportvorrichtung (1) nach Anspruch 5, wobei die Transportvorrichtung (1) derart ausgebildet ist, dass die Behälter (2) zumindest nach einer Entnahme aus den Pucks (3) und vor einer Übergabe an die Behandlungsmaschine (5) und nach einer Übernahme aus der Behandlungsmaschine (5) und vor einer Übergabe an die Pucks (3) hängend transportiert werden, und wobei die Puck-Hubeinrichtung (13) derart ausgebildet und im Betrieb derart angeordnet ist, dass die Pucks (3) dort abgesenkt werden, wo die Behälter (2) zum hängenden Transport gegriffen werden, und/oder dass die Pucks (3) derart angehoben werden, dass sie auf Höhe der Behälter (2) sind, wenn diese nach dem hängenden Transport losgelassen werden.

7. Transportvorrichtung (1) nach Anspruch 6, wobei die Puck-Hubeinrichtung (13) derart ausgebildet und im Betrieb derart angeordnet ist, dass die Pucks (3) so weit abgesenkt werden, dass die Behälter (2) aus den Pucks (3) entnommen werden, bzw. so weit angehoben werden, dass die Behälter (2) in den Puck (3) gesetzt werden.

8. Transportvorrichtung (1) nach Anspruch 6 oder 7, wobei die wenigstens eine Puck-Hubeinrichtung (13) eine erste Puck-Hubeinrichtung (13), die derart ausgebildet und im Betrieb derart angeordnet ist, dass die Pucks (3) dort abgesenkt werden, wo die Behälter (2) zum hängenden Transport gegriffen werden, und eine zweite Puck-Hubeinrichtung (13), die derart ausgebildet und im Betrieb derart angeordnet ist, dass die Pucks (3) derart angehoben werden, dass sie auf Höhe der Behälter (2) sind, wenn diese nach dem hängenden Transport losgelassen werden.

9. Transportvorrichtung (1) nach einem der Ansprüche 5 bis 8, wobei die Puck-Hubeinrichtung (13) einen Hebestern umfasst.

10. Transportvorrichtung (1) nach einem der Ansprüche 5 bis 9, umfassend einen Einlaufstern, einem Auslaufstern und/oder einen Zwischenstern wobei eine der Puck-Hubeinrichtungen integral mit dem Einlaufstern, dem Auslaufstern oder dem Zwischenstern ausgebildet oder an diesem befestigt ist.

11. Transportvorrichtung (1) nach Anspruch 10, wobei die Puck-Hubeinrichtung (13) integral mit dem Zwischenstern ausgebildet oder an diesem befestigt ist und derart ausgebildet und im Betrieb derart angeordnet ist, dass sie die Pucks (3) für die Übergabe der Behälter (2) zum hängenden Transport anhebt und nach der Übernahme der Behälter (2) nach dem hängenden Transport absenkt.

12. Transportvorrichtung (1) nach einem der vorangegangen Ansprüche, umfassend
eine Mehrzahl von Greifelementen (14), die zum Greifen der Behälter (2) zum hängenden Transport ausgebildet sind, und
eine Greifelement-Hubeinrichtung, die derart ausgebildet und im Betrieb derart angeordnet ist, dass die Greifelemente nach dem Greifen der Behälter (2) so weit angehoben werden, dass die Behälter (2) aus den Pucks (3) entnommen werden, und/oder vor dem Loslassen der Behälter (2) nach dem hängenden Transport so weit abgesenkt werden, dass die Behälter (2) in den Puck (3) gesetzt werden.

13. Verfahren zum Transportieren von Pucks (3) und Behältern, wobei Behälter (2) jeweils in einem Puck (3) stehend zu einer Behandlungsstrecke (6) einer Behandlungsmaschine (5) transportiert werden, entlang der Behandlungsstrecke (6) transportiert werden und jeweils in einem Puck (3) stehend von der Behandlungsstrecke (6) weg transportiert werden und wobei die Behälter (2) beim Durchlaufen der Behandlungsstrecke (6) aus den Pucks (3) entnommen sind, und **dadurch gekennzeichnet, dass** die Pucks (3) von einem Einlauf der Behandlungsmaschine (5), wo die Behälter (2) aus den Pucks (3) entnommen werden, bis zu einem Auslauf der Behandlungsmaschine (5), wo die Behälter (2) wieder in die Pucks (3) gesetzt werden, umlaufend um die Behandlungsmaschine (5) weiter transportiert werden.

14. Verfahren nach Anspruch 13, wobei die Pucks (3) entlang der Behandlungsstrecke (6) vertikal versetzt zu den Behältern (2), insbesondere synchron mit den Behältern (2), mitgeführt werden.

15. Verfahren nach Anspruch 13 oder Anspruch 14, wobei die Behälter (2) zumindest nach einer Entnahme aus den Pucks (3) und vor einer Übergabe an die Behandlungsmaschine (5) und nach einer Übernahme aus der Behandlungsmaschine (5) und vor einer Übergabe an die Pucks (3) hängend transportiert werden, wobei die Pucks (3) abgesenkt werden, wenn die Behälter (2) zum hängenden Transport gegriffen wurden, und nach dem Mitführen entlang der Behandlungsstrecke (6) derart angehoben werden, dass sie auf Höhe der Behälter (2) sind, wenn diese nach dem hängenden Transport losgelassen werden.

## Claims

1. A transporting apparatus (1) for transporting containers (2) comprising a plurality of pucks (3), respectively configured for receiving and transporting a container (2) in an upright posture,
wherein the transporting apparatus (1) is configured for enabling the transport of the containers (2) by means of the pucks (3) towards a treatment path (6) of a treatment machine (5) and away from the treatment path (6); and
wherein the transporting apparatus (1) is configured such that the containers (2) are removed from the pucks (3) when passing through the treatment path (6),
wherein the transporting apparatus (1) is configured such that the containers (2) are removed from the pucks (3) at an inlet of the treatment machine (15) and placed into the pucks (3) again at an outlet of the treatment machine (5); and
**characterized in that**
the pucks (3) can be further transported from the inlet of the treatment machine (5) to the outlet of the treatment machine (5) while circulating around the treatment machine (5).

2. The transporting apparatus (1) according to claim 1, wherein the transporting apparatus (1) is configured such that in operation the pucks (3) are driven along the treatment path (6) vertically offset to the containers (2), in particular synchronously to the containers (2), by means of a driver device (11), wherein, in particular, the driver device (11) comprises a driver starwheel or a rotary actuator.

3. The transporting apparatus (1) according to claim 2, wherein the transporting apparatus (1) is configured such that in operation the relative position between a puck (3) and the container taken from this puck (3) remains unchanged during transport along the treatment path (6).

4. The transporting apparatus (1) according to any one of the preceding claims, comprising a or the driver device (11), wherein the driver device (11) is configured such that there is provided a mechanically rigid coupling between the position of the pucks (3) and container support members (12) of the treatment machine (5), or that the driver device (11) comprises a separate drive.

5. The transporting apparatus (1) according to any one of the preceding claims, comprising at least one puck lifting device (13) configured for adjusting the vertical position of the pucks (3).

6. The transporting apparatus (1) according to claim 5, wherein the transporting apparatus (1) is configured such that the containers (2) are transported while being suspended, at least after removing them from the pucks (3) and prior to transferring them to the treatment machine (5) and after being taken over from the treatment machine (5) and before transferring them to the pucks (3), and wherein the puck lifting device (13) is configured and arranged in operation such that the pucks (3) are lowered at a location where the containers (2) are picked up for suspended transport and/or the pucks (3) are lifted such that they are level with the containers (2) when the same are released after suspended transport.

7. The transporting apparatus (1) according to claim 6, wherein the puck lifting device (13) is configured and arranged in operation such that the pucks (3) are lowered to an extent that the containers (2) are removed from the pucks (3) or are lifted to an extent that the containers (2) are placed into the puck (3).

8. The transporting apparatus (1) according to claims 6 or 7, wherein the at least one puck lifting device (13) includes a first puck lifting device (13) which is configured and arranged in operation such that the pucks (3) are lowered at a location where the containers (2) are picked up for suspended transport, and a second puck lifting device (13) which is configured and arranged in operation such that the pucks (3) are lifted such that they are level with the containers (2) when the same are released after suspended transport.

9. The transporting apparatus (1) according to any one of claims 5 to 8, wherein the puck lifting device (13) comprises a lifting starwheel.

10. The transporting apparatus (1) according to any one of claims 5 to 9, comprising an inlet starwheel, and an outlet starwheel and/or an intermediate starwheel, wherein one of the puck lifting devices is integrated with the inlet starwheel, the outlet starwheel or the intermediate starwheel or attached thereto.

11. The transporting apparatus (1) according to claim 10, wherein the puck lifting device (13) is integrated with the intermediate starwheel or attached thereto and is configured and arranged in operation such that it lifts the pucks (3) for transfer of the containers (2) for suspended transport and lowers the same subsequent to taking over the containers (2) after the suspended transport.

12. The transporting apparatus (1) according to any one of the preceding claims, comprising a plurality of gripping members (14) configured for gripping the containers (2) for suspended transport, and
a gripping member lifting device configured and arranged in operation such that the gripping members are lifted after gripping the containers (2) to an extent that the containers (2) are removed from the pucks (3) and/or are lowered prior to releasing the containers (2) after the suspended transport such that the containers (2) are placed into the puck (3).

13. A method for transporting of pucks (3) and containers (2), wherein the containers (2) are respectively transported in a puck (3) towards a treatment path (6) of a treatment machine (5) in an upright posture, are transported along the treatment path (6) and transported away from the treatment path (6) while standing in a puck (3), and wherein the containers (2) are removed from the pucks (3) when passing through the treatment path (6), and
**characterized in that**
the pucks (3) are further transported from an inlet of the treatment machine (5) where the containers (2) are removed from the pucks (3) to an outlet of the treatment machine (5) where the containers (2) are placed into the pucks (3) again in a manner circulating around the treatment machine (5).

14. The method according to claim 13, wherein the pucks (3) are driven along the treatment path (6) vertically offset to the containers (2), in particular synchronously to the containers (2).

15. The method according to claim 13 or claim 14, wherein the containers (2) are transported while being suspended, at least after removing them from the pucks (3) and before transferring them to the treatment machine (5) and after being taken over from the treatment machine (5) and before transferring them to the pucks (3), and wherein the pucks (3) are lowered when the containers (2) have been picked up for suspended transport and after having been carried along the treatment path (6) are lifted such that they are level with the containers (2) when the same are released after the suspended transport.

## Revendications

1. Dispositif de transport (1) destiné à transporter des récipients (2), comprenant une pluralité de palettes (3) conçues respectivement pour recevoir et transporter verticalement un récipient (2),
dans lequel le dispositif de transport (1) est conçu de telle sorte que les récipients (2) peuvent être transportés au moyen des palettes (3) vers une voie de traitement (6) d'une machine de traitement (5) et depuis la voie de traitement, et
dans lequel le dispositif de transport (1) est conçu de telle sorte que les récipients (2) sont retirés des palettes (3) lorsqu'ils traversent la voie de traitement (6),
dans lequel le dispositif de transport (1) est conçu de telle sorte que les récipients (2) sont retirés des palettes (3) à une entrée de la machine de traitement (5) et sont remis dans les palettes (3) à une sortie de la machine de traitement (5), et
**caractérisé en ce que**
les palettes (3) peuvent être transportés autour de la machine de traitement (5) à partir de l'entrée de la machine de traitement (5) jusqu'à la sortie de la machine de traitement (5).

2. Dispositif de transport (1) selon la revendication 1, dans lequel le dispositif de transport (1) est conçu de telle sorte que les palettes (3) sont acheminés en fonctionnement le long de la voie de traitement (6) de manière décalée verticalement par rapport aux récipients (2), en particulier de manière synchrone avec les récipients (2), au moyen d'un dispositif d'entraînement (11), dans lequel le dispositif d'entraînement (11) comprend en particulier une étoile d'entraînement ou un moteur de réglage rotatif.

3. Dispositif de transport (1) selon la revendication 2, dans lequel le dispositif de transport (1) est conçu de telle sorte qu'en fonctionnement, la position relative entre une palette (3) et le récipient qui a été retiré de cette palette (3) reste inchangée pendant le transport le long de la voie de traitement (6).

4. Dispositif de transport (1) selon l'une quelconque des revendications précédentes, comprenant un ou le dispositif d'entraînement (11), le dispositif d'entraînement (11) étant conçu de telle sorte qu'il existe un accouplement mécaniquement rigide entre la position des palettes (3) et des éléments de maintien de récipient (12) de la machine de traitement (5) ou que le dispositif de transport (11) comprend un entraînement séparé.

5. Dispositif de transport (1) selon l'une quelconque des revendications précédentes, comprenant au moins un dispositif de levage de palettes (13), qui est conçu pour régler la position verticale des palettes (3).

6. Dispositif de transport (1) selon la revendication 5, dans lequel le dispositif de transport (1) est conçu de telle sorte que les récipients (2) sont transportés suspendus au moins après un retrait des palettes (3) et avant un transfert vers la machine de traitement (5) et après un transfert depuis la machine de traitement (5) et avant un transfert vers les palettes (3), et dans lequel le dispositif de levage de palettes (13) est conçu et agencé en fonctionnement de telle sorte que les palettes (3) sont abaissés là où les récipients (2) sont saisis pour un transport suspendu et/ou que les palettes (3) sont soulevés de telle sorte qu'elles soient à la hauteur des récipients (2) lorsqu'ils sont libérés après le transport suspendu.

7. Dispositif de transport (1) selon la revendication 6, dans lequel le dispositif de levage de palettes (13) est conçu et agencé en fonctionnement de telle manière que les palettes (3) sont abaissés de telle sorte que les récipients (2) soient retirés des palettes (3) ou soient soulevés de telle manière que les récipients (2) soient placés dans les palettes (3).

8. Dispositif de transport (1) selon la revendication 6 ou 7, dans lequel le au moins un dispositif de levage de palettes (13) est un premier dispositif de levage de palettes (13) qui est conçu et agencé en fonctionnement de telle sorte que les palettes (3) sont abaissées là où les récipients (2) sont saisis pour un transport suspendu, et un second dispositif de levage de palettes (13) qui est conçu et agencé en fonctionnement de telle sorte que les palettes (3) sont soulevées de telle sorte qu'elles soient à la hauteur des récipients (2) lorsqu'ils sont libérés après un transport suspendu.

9. Dispositif de transport (1) selon l'une des revendications 5 à 8, dans lequel le dispositif de levage de palettes (13) comprend une étoile de levage.

10. Dispositif de transport (1) selon l'une quelconque des revendications 5 à 9, comprenant une étoile d'entrée, une étoile de sortie et/ou une étoile intermédiaire, dans lequel l'un des dispositifs de levage de palettes est formé d'un seul tenant avec l'étoile d'entrée, l'étoile de sortie ou l'étoile intermédiaire ou est fixé à celle-ci.

11. Dispositif de transport (1) selon la revendication 10, dans lequel le dispositif de levage de palettes (13) est formé d'un seul tenant avec l'étoile intermédiaire ou est fixé à celle-ci et est conçu et agencé en fonctionnement de manière à soulever les palettes (3) pour le transfert des récipients (2) vers le transport suspendu et à les abaisser après la reprise des récipients (2) après le transport suspendu.

12. Dispositif de transport (1) selon l'une quelconque des revendications précédentes, comprenant une pluralité d'éléments de préhension (14) qui sont conçus pour saisir les récipients (2) pour un transport suspendu, et
un dispositif de levage d'élément de préhension conçu et agencé de telle sorte que les éléments de préhension soient relevés après avoir saisi les récipients (2) à tel point que les récipients (2) soient retirés des palettes (3), et/ou abaissés avant de libérer les récipients (2) après un transport suspendu à tel point que les récipients (2) soient placés dans la palette (3).

13. Procédé de transport de palettes (3) et de récipients, dans lequel les récipients (2) sont respectivement transportés verticalement dans une palette (3) vers une voie de traitement (6) d'une machine de traitement (5), sont transportés le long de la voie de traitement (6) et sont respectivement transportés verticalement dans une palette (3) loin de la voie de traitement (6) et dans lequel les récipients (2) sont retirés des palettes (3) lors du passage dans la voie de traitement (6),
et **caractérisé en ce que**
les palettes (3) sont transportées autour de la machine de traitement (5) à partir d'une entrée de la machine de traitement (5), où les récipients (2) sont retirés des palettes (3), jusqu'à une sortie de la machine de traitement (5), où les récipients (2) sont remis dans les palettes (3).

14. Procédé selon la revendication 13, dans lequel les palettes (3) sont entraînés le long de la voie de traitement (6) de manière décalée verticalement par rapport aux récipients (2), en particulier de manière synchrone avec les récipients (2).

15. Procédé selon la revendication 13 ou la revendication 14, dans lequel les récipients (2) sont transportés suspendus au moins après un retrait des palettes (3) et avant un transfert vers la machine de traitement (5) et après un transfert depuis la machine de traitement (5) et avant un transfert vers les palettes (3), dans lequel les palettes (3) sont abaissées lorsque les récipients (2) ont été saisis pour le transport suspendu, et sont soulevées après avoir été transportées le long de la voie de traitement (6) de telle sorte qu'elles soient à la hauteur des récipients (2) lorsqu'ils sont libérés après le transport suspendu.
